Europäisches Patentamt

European Patent Office

Office européen des brevets

(11) Veröffentlichungsnummer : **0 341 565 B1**

(12) **EUROPÄISCHE PATENTSCHRIFT**

(45) Veröffentlichungstag der Patentschrift :
**22.07.92 Patentblatt 92/30**

(21) Anmeldenummer : **89108005.3**

(22) Anmeldetag : **03.05.89**

(51) Int. Cl.⁵ : **B01D 53/34**

(54) **Verfahren zur selektiven Entfernung und Vernichtung von Cyanwasserstoff aus nitrosehaltigen Gasen.**

(30) Priorität : **13.05.88 AT 1247/88**

(43) Veröffentlichungstag der Anmeldung :
**15.11.89 Patentblatt 89/46**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**DE-A- 3 531 406**
**FR-A- 2 278 384**

(73) Patentinhaber : **Chemie Linz Gesellschaft
m.b.H.
St.Peter-Strasse 25
A-4021 Linz (AT)**

(72) Erfinder : **Kittl, Walter, Dr.
Panholzerweg 20/6
A-4030 Linz (AT)**
Erfinder : **Stern, Gerhard, Dipl.-Ing.Dr.
Unterrudersbach 7
A-4180 Sonnberg (AT)**

(74) Vertreter : **Kunz, Ekkehard, Dr.
Chemie Holding AG Patentwesen St.
Peter-Strasse 25
A-4021 Linz (AT)**

EP 0 341 565 B1

EP 0 341 565 B1

## Beschreibung

Die Erfindung betrifft ein Verfahren zur selektiven Entfernung und Vernichtung von Cyanwasserstoff (HCN) aus Nitrosegasen.

Bei der Oxidation von alkylierten Aromaten mit Salpetersäure entsteht neben Nitrosegasen auch HCN im Abgas. Die Nitrosegase NO und $NO_2$ können zur Salpetersäureerzeugung eingesetzt werden, HCN muß aber vorher aus dem Abgas entfernt werden. Zur Entfernung von HCN aus Abgasen anderer Zusammensetzungen ist eine Reihe von Verfahren bekannt. So ist aus DE-PS 1121268 ein Verfahren zum Auswaschen von $NH_3$, $H_2S$ und HCN aus Gasen mittels schwefelsaurer Eisen-(II)-salzlösungen bekannt. Diese Gaswäsche erfolgt in drei Stufen bei steigenden pH-Werten, wobei jeweils mit den Gasbestandteilen entsprechende, teilweise unlösliche Salze gebildet werden, die anschließend entsorgt werden müssen. Weiters ist aus DE-OS 3327512 bekannt, HCN über einen mit Schwefel beladenen Aktivkohlefestbettkatalysator aus Gasgemischen zu entfernen, wobei Thiocyanate entstehen. Die Reinigung des mit Thiocyanaten verunreinigten Katalysators und deren Entsorgung ist nicht beschrieben. Weiters ist aus US-PS 2,747,962 die Möglichkeit bekannt, HCN durch alkalische Absorption aus sauren Abgasen, die weiters $H_2S$, $SO_2$ und $CO_2$ enthalten, zu entfernen. Es entstehen dabei Salze, die wiederum entsorgt werden müssen.

Aufgabe der vorliegenden Erfindung war es daher, ein Verfahren zu finden, bei dem HCN aus sauren nitrosehaltigen Abgasen so entfernt werden kann, daß keine Produkte anfallen, die anschließend zu entsorgen sind. Dies konnte durch ein einfaches Verfahren gelöst werden, bei dem HCN durch Waschen des Abgases mit Salpetersäure im Gegenstrom aus diesem entfernt wird, sodaß das verbleibende NO und $NO_2$-haltige Abgas quantitativ zu Salpetersäure verarbeitet werden kann. Die von der Salpetersäure aufgenommene HCN wird anschließend beim Regenerieren der Waschsäure bei erhöhter Temperatur hydrolysiert und oxidiert.

Gegenstand der Erfindung ist demnach ein Verfahren zur selektiven Entfernung und Vernichtung von Cyanwasserstoff, der in nitrosehältigen Gasen enthalten ist, das dadurch gekennzeichnet ist, daß die Nitrosegase in einer Absorptionskolonne mit Salpetersäure im Gegenstrom gewaschen wird und die mit Cyanwasserstoff beladene Salpetersäure bei erhöhter Temperatur bei gleichzeitiger Hydrolyse und Oxidation des Cyanwasserstoffes regeneriert wird.

Zur Durchführung des erfindungsgemäßen Verfahrens wird das Abgas aus der Salpetersäureoxidation zuerst mit Salpetersäure im Gegenstrom gewaschen. Die Temperatur liegt dabei über dem Schmelzpunkt und unterhalb des Siedepunktes der Salpetersäure. Bevorzugt erfolgt die Absorption jedoch bei Temperaturen zwischen 0°C und 30°C. Die Absorption kann drucklos oder unter Druck erfolgen, vorzugsweise bei dem Druck der vorhergehenden Oxidation mit Salpetersäure, beispielsweise bei 1 - 25 bar. Die Konzentration der Waschsäure kann in einem weiten Bereich schwanken. Um jedoch eine rasche Regeneration der mit HCN beladenen Waschsäure sicherzustellen, soll die Konzentration der Salpetersäure vorzugsweise 20 Gew.% bis 65 Gew.% betragen. Bevorzugt wird jene Konzentration verwendet, die auch bei der Salpetersäureoxidation zum Einsatz kommt.

Weist das zu reinigende Abgas aus der Salpetersäureoxidation einen niedrigen Oxidationsgrad, d. h. einen hohen Anteil an NO auf, ist es zweckmäßig, NO vor der Absorption, zumindest teilweise durch Luftzufuhr zu oxidieren, da sonst ein Teil der eingesetzten Waschsäure für die weitere Oxidation des NO verbraucht wird und dann die anschließende Regeneration langsamer verläuft.

Nach der Absorption wird die mit HCN beladene Waschsäure kontinuierlich oder diskontinuierlich auf eine Temperatur von etwa 50°C bis zum Siedepunkt des Gemisches drucklos oder unter Druck erhitzt. Dabei wird das gelöste HCN hydrolysiert und oxidiert, es entstehen NO, $NO_2$, $CO_2$ und $NH_3$. NO und $NO_2$ können wieder quantitiv zu Salpetersäure umgesetzt werden. Die Temperatur, bei der die Regeneration durchgeführt wird, wird nach der zur Verfügung stehenden Verweilzeit im Regenerationskessel und der zugelassenen Restkonzentration von HCN in der Salpetersäure gewählt. Je höher die Temperatur gewählt wird, desto schneller verläuft die Regeneration.

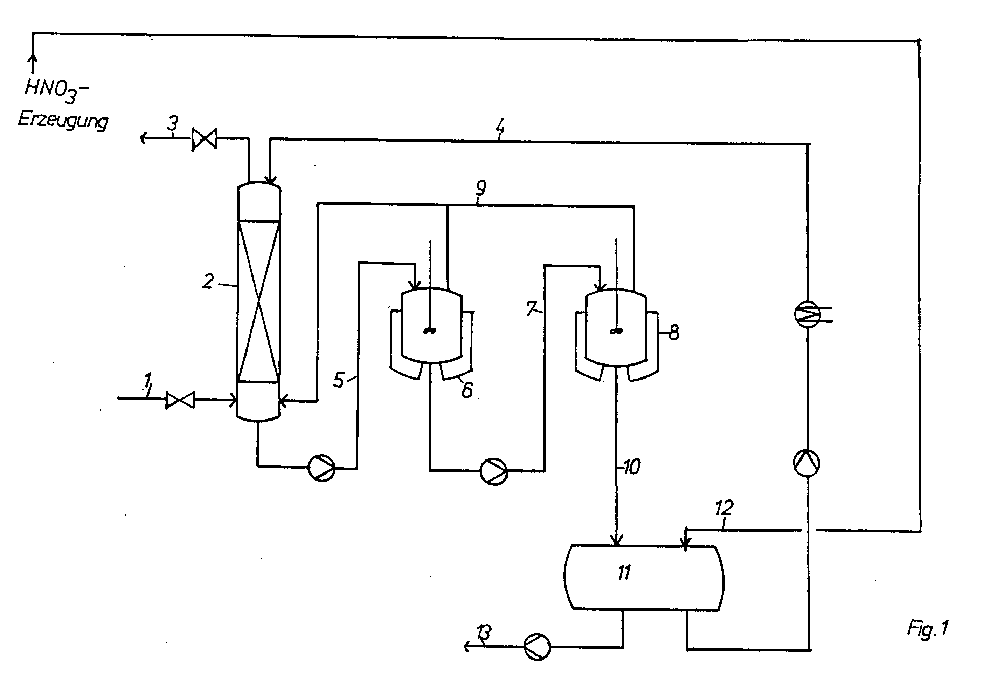

In Fig. 1 ist eine Möglichkeit dargestellt, das erfindungsgemäße Verfahren bei kontinuierlicher Verfahrensweise durchzuführen. Das Abgas aus der Salpetersäureoxidation wird über eine Leitung 1 zum Boden der Waschkolonne 2 geführt. Über Leitung 4 wird am Kopf der Kolonne Salpetersäure eingebracht, die mit dem Abgas im Gegenstrom reagiert.

Das gewaschene Gas verläßt die Kolonne über Leitung 3 und wird zur Salpetersäureerzeugung geführt. Die mit HCN beladene Salpetersäure wird am Boden der Waschkolonne über Leitung 5 abgezogen und in einen ersten Regenerationskessel 6 und anschließend über Leitung 7 in einen zweiten Regenerationskessel 8 gepumpt. In den Regenerationskesseln 6 und 8 wird die Salpetersäure unter Rühren auf der gewünschten Regenerationstemperatur gehalten, wobei die Füllhöhe möglichst konstant gehalten wird. Das in den Regenerationskesseln durch den Abbau des HCN entstehende Gas wird über Leitung 9 am Boden der Absorptionskolonne 2 rückgeleitet. Aus dem Regenerationskessel 8 wird die gereinigte Salpetersäure über Leitung

2

10 in einen Lagerbehälter geleitet, wo verbrauchte Salpetersäure mit frischer ergänzt wird (Leitung 12). Aus dem Lagerbehälter kann die Salpetersäure über Leitung 13 zur Oxidation eingesetzt werden oder über Leitung 4 über einen Wärmetauscher in die Absorptionskolonne als Waschsäure gepumpt werden.

Das erfindungsgemäße Verfahren kann auch diskontinuierlich durchgeführt werden, bevorzugt ist aber die kontinuierliche Arbeitsweise. Die Restkonzentration an HCN im Abgas aus der Absorptionskolonne hängt ab von der Zahl der theoretischen Böden der Kolonne, der Absorptionstemperatur, dem Absorptionsdruck sowie von der Menge der eingesetzten Salpetersäure und deren Beladung mit Cyanwasserstoff. Je höher Bodenzahl, Absorptionsdruck und eingesetzte Salpetersäure und je niedriger die Absorptionstemperatur und die Beladung der Salpetersäure mit Cyanwasserstoff sind, desto geringer ist die Restkonzentration an HCN im rückgeführten Gas. Die zugelassene Restkonzentration an HCN wird von der Salpetersäureerzeugung bestimmt, wobei durchaus Konzentrationen von etwa 300 ppm akzeptabel sind. Bei geeigneter Auslegung der Absorptionskolonne ist HCN im Abgas nicht mehr nachweisbar.

Der Abbau des Cyanwasserstoffes in der Waschsäure erfolgt umso vollständiger, je höher die Zahl und das Volumen der Regenerationskessel sind, da sich mit Erhöhung von Zahl und Volumen eine längere Verweilzeit verunreinigter Säure in den Kesseln ergibt. Je höher die Regenerationstemperatur und je höher die Konzentration der Salpetersäure, desto vollständiger der Abbau der HCN.

Beispiel 1

Das Abgas aus einer Oxidation von alkylierten Aromaten mit Salpetersäure mit einem Volumenfluß von 10 m³/h und einem durchschnittlichen Cyanwasserstoffgehalt von 10 000 ppm wurde mit 60 Gew.% Salpetersäure in einer Füllkörperkolonne mit 3 theoretischen Böden gewaschen. Es wurden 50 l 60 Gew.% $HNO_3$/h am Kopf der Kolonne eingeleitet. Die Absorption erfolgte bei einer Temperatur von 25°C und unter einem Druck von 9 bar. Die am Boden der Absorptionskolonne abgezogene Salpetersäure enthielt durchschnittlich 2000 ppm HCN und wurde in zwei Regenerationskesseln mit einem Volumen von je 400 l bei einer Remperatur von 100°C unter Rühren regeneriert.

Im Gas aus der Absorptionskolonne lag der Gehalt an HCN unter der Nachweisgrenze (Nachweisgrenze 10 ppm), die regenerierte Salpetersäure enthielt 1 ppm HCN.

Beispiel 1 - 6

Analog Beispiel 1 wurde die selektive Entfernung von HCN bei unterschiedlicher Bedingungen, wie in Tabelle 1 angegeben durchgeführt. Die Ergebnisse sind in Tabelle 2 wiedergegeben.

## Tabelle 1

### Absorptions (A)- und Regenerationsbedingungen (R)

| Bsp. Nr. | p(bar) (A,R) | i($HNO_3$) Gew.% | V($HNO_3$) l/h | V(Abgas) m³/h | T(A) °C | T(R) °C |
|---|---|---|---|---|---|---|
| 1 | 9 | 60 | 50 | 10 | 25 | 100 |
| 2 | 4 | 60 | 75 | 15 | 25 | 100 |
| 3 | 9 | 60 | 50 | 10 | 25 | 80 |
| 4 | 4 | 60 | 50 | 10 | 25 | 50 |
| 5 | 4 | 40 | 75 | 15 | 25 | 100 |
| 6 | 4 | 20 | 75 | 15 | 25 | 100 |

Tabelle 2

Gehalt an HCN in ppm

| Bsp.Nr. | im Gas | | in HNO₃ | |
|---|---|---|---|---|
| | vor Absorption | nach Absorption | vor Regeneration | nach Regeneration |
| 1 | 10000 | unter Nachweis-grenze | 2000 | 1 |
| 2 | 8000 | 20 | 1600 | 2 |
| 3 | 10000 | 12 | 2000 | 25 |
| 4 | 5000 | 140 | 1200 | 180 |
| 5 | 10000 | 38 | 2000 | 20 |
| 6 | 10000 | 500 | 2600 | 680 |

**Patentansprüche**

1. Verfahren zur selektiven Entfernung und Vernichtung von Cyanwasserstoff der im Gemisch neben Nitrosegasen enthalten ist, dadurch gekennzeichnet, daß das Nitrosegase enthaltende Gemisch in einer Absorptionskolonne mit Salpetersäure im Gegenstrom gewaschen wird und die mit Cyanwasserstoff beladene Salpetersäure bei erhöhter Temperatur bei gleichzeitiger Hydrolyse und Oxidation des Cyanwasserstoffes regeneriert wird.

2. Verfahren nach Anspruch 1, dadurch gekennzeichnet, daß die Absorption bei Temperaturen zwischen 0 und 30°C und einem Druck von 1 - 25 bar durchgeführt wird.

3. Verfahren nach Anspruch 1, dadurch gekennzeichnet, daß die mit HCN beladene Salpetersäure bei Temperaturen zwischen 50 und 120°C regeneriert wird.

4. Verfahren nach Anspruch 1, dadurch gekennzeichnet, daß die Konzentration der Salpetersäure zwischen 20 und 65 Gew.% eingehalten wird.

5. Verfahren nach einem der Ansprüche 1 bis 4, dadurch gekennzeichnet, daß es kontinuierlich durchgeführt wird.

**Claims**

1. Process for selective removal and destruction of hydrogen cyanide contained in a mixture alongside nitrous gases, characterized in that the mixture containing nitrous gases is washed with nitric acid in counter-current in an absorption column and the nitric acid charged with hydrogen cyanide is regenerated at elevated temperature, with simultaneous hydrolysis and oxidation of the hydrogen cyanide.

2. Process according to Claim 1, characterized in that the absorption is carried out at temperatures between 0 and 30°C under a pressure of 1 - 25 bar.

3. Process according to Claim 1, characterized in that the nitric acid charged with HCN is regenerated at temperatures between 50 and 120°C.

4. Process according to Claim 1, characterized in that the concentration of the nitric acid is kept between 20 and 65% by weight.

5. Process according to one of Claims 1 to 4, characterized in that it is carried out continuously.

**Revendications**

1. Procédé pour éliminer sélectivement et détruire l'acide cyanhydrique contenu dans un mélange de gaz

4

nitreux, caractérisé en ce qu'on lave à contre courant le melange contenu les gaz nitreux avec -l'acide nitrique dans une colonne d'absorption et on régénère l'acide nitrique chargé d'acide cyanhydrique en élevant la température par hydrolyse simultanée et oxydation de l'acide cyanhydrique.

2. Procédé selon la revendication 1, caractérisé en ce que l'absorption est réalisée à des températures comprises entre 0 et 30°C et une pression de 1 à 25 bar.

3. Procédé selon la revendication 1, caractérisé en ce que l'acide nitrique chargé en HCN est régénéré à des températures comprises entre 50 et 120 °C.

4. Procédé selon la revendication 1, caractérisé en ce que la concentration de l'acide nitrique est comprise entre 20 et 65% en masse.

5. Procédé selon l'une des revendications 1 à 4, caractérisé en ce qu'il est conduit en continu.

Fig. 1

EP 0 341 565 B1